# EUROPÄISCHE PATENTSCHRIFT

(11) **EP 0 519 934 B1**
(45) Veröffentlichungstag und Bekanntmachung des Hinweises auf die Patenterteilung: **15.06.1994**
(21) Anmeldenummer: 91904041.0
(22) Anmeldetag: 28.02.1991
(51) Int. Cl.: G01C 21/20

(54) **NAVIGATIONSSYSTEM**
NAVIGATION SYSTEM
SYSTEME DE NAVIGATION

(30) Priorität: 16.03.1990 DE 4008460
(43) Veröffentlichungstag der Anmeldung: 30.12.1992
(73) Patentinhaber: ROBERT BOSCH GMBH, 70442 Stuttgart (DE)
(72) Erfinder: BRAEGAS, Peter, D-3200 Hildesheim (DE)
(74) Vertreter: Friedmann, Jürgen, Dr.-Ing.
(86) Internationale Anmeldenummer: DE9100175
(87) Internationale Veröffentlichungsnummer: WO9114154

(56) Entgegenhaltungen:
- EP-A- 0 369 539
- DE-A- 3 501 039
- Funkschau, Band 60, Nr. 18, 26. August 1988, (München, DE), W. Püngel: "Elektronisch um den Stau", Seiten 43-45

## Beschreibung

### Stand der Technik

Die Erfindung geht aus von einem Navigationssystem nach der Gattung des Hauptanspruchs. Aus der DE-OS 35 12 127 ist bereits ein Ortungs- und Navigationssystem für Landfahrzeuge bekanntgeworden, mittels dem es möglich ist, auf optimalem Weg das Ziel zu erreichen. Ist der Standort des Fahrzeuges und der Zielort bekannt, wird man durch das bekannte Navigationssystem auf jeweils optimalen Weg zum Ziel geführt. Ein weiteres Navigationssystem ist aus der DE-OS 29 25 656 bekannt. Bei diesem Zielführungssystem werden von Stützpunkten im Gelände Daten über die Lage des Stützpunktes zum Fahrzeug übertragen. Aufgrund der gleichzeitig übertragenen möglichen Fahrtrouten wird im Navigationssystem des Fahrzeuges die Fahrtroute ausgewählt, die zum Ziel führt.

Empfänger zum Dekodieren von Verkehrsnachrichten sind beispielsweise aus der DE-OS 35 36 820 bekannt. Bei den bekannten Verkehrsfunkdekoder in den Empfängern werden die Verkehrsnachrichten digital übertragen und optisch oder akustisch zur Anzeige gebracht. Die Verkehrsnachrichten ist dabei normiert übertragen, so daß Straßen und Streckenführungen sowie Ortsnamen sowie die Art der Behinderung leicht erkannt werden können. Die DE-OS 37 24 516 zeigt und beschreibt ein Verfahren zur fahrtroutenselektiven Wiedergabe von Verkehrsnachrichten sowie einen entsprechenden Fahrzeugempfänger, mittels dem es möglich ist, nur solche Verkehrsnachrichten auszugeben, die auf einer bestimmten Fahrtroute liegen. Durch diese Maßnahme wird erreicht, daß nicht sämtliche Verkehrsnachrichten ausgegeben werden, sondern lediglich eine begrenzte Anzahl von Verkehrsnachrichten, die den Fahrer auch tatsächlich betreffen.

Bei bekannten Navigationssystemen ist es unvorteilhaft, daß die Route unabhängig von der Verkehrslage bestimmt und ausgegeben wird. Zwar ist es dem Fahrer möglich, beispielsweise bei Straßensperrungen, dem Routenvorschlag nicht zu folgen und stattdessen eine andere Richtung einzuschlagen, woraufhin eine neue Route vom Navigationssystem bestimmt wird, oftmals sind jedoch Behinderungen nicht sofort zu erkennen, beispielsweise wenn ein Stau im Bereich der empfohlenen Fahrstrecke besteht.

Aus der Druckschrift Funkschau, Bd. 60, Nr. 18, 26.08.88, Seiten 43-45 ist ein Navigationssystem bekannt, das die Auswertung von Rundfunk-Verkehrsnachrichten gestatten soll.

### Vorteile der Erfindung

Das erfindungsgemäße Navigationssystem mit den kennzeichnenden Merkmalen des Hauptanspruchs hat demgegenüber den Vorteil, daß die vom Navigationssystem bestimmte Route die vom Verkehrfunkempfänger empfangene Verkehrsnachricht mit berücksichtigt. Der Vorteil daraus ist, daß beispielsweise Staus oder Verkehrsbehinderungen weiträumig umfahrbar werden, da das Navigationssystem solche Behinderungen aufgrund der Verkehrsfunknachrichten erkennt und sie bei der Routensuche berücksichtigt. Durch diese Maßnahme wird erreicht, daß bereits frühzeitig abweichende Routen vorgeschlagen werden können, so daß der Fahrer eines Fahrzeuges nicht erst beim Erreichen eines Staus oder bei einer gesperrten Straße erkennt, daß es unter Umständen günstiger gewesen wäre, eine andere Strecke zu fahren.

Durch die in den Unteransprüchen aufgeführten Maßnahmen sind vorteilhafte Weiterbildungen und Verbesserungen des im Hauptanspruch angegebenen Navigationssystems möglich. Besonders vorteilhaft ist es, in den Verkehrsnachrichten eine Information über die Dauer der Fahrzeit in dem entsprechenden Streckenabschnitt zu übertragen und bei der Routensuche eine Route mit einer minimalen Fahrzeit zu bestimmen. Hierdurch wird es möglich, die Verkehrsbehinderung zu gewichten, und nur bei gravierenden Störungen eine andere Route vorzuschlagen. Weiterhin ist es vorteilhaft, durch das Navigationssystem zwei Routen zu ermitteln, eine ohne Berücksichtigung von Verkehrsmeldungen und eine mit Berücksichtigung von Verkehrsmeldungen. Dadurch wird es möglich; Streckenabweichungen zu erkennen und diese Streckenabweichungen mit den empfangenen Strecken der Verkehrsnachrichten zu vergleichen. Dadurch wird es möglich festzustellen, welche Verkehrsmeldungen bei der Routensuche berücksichtigt wurden. Wiederholen sich dann die Verkehrsmeldungen oder ändern sie sich, kann leicht festgestellt werden, ob nun eine neue Route bestimmt werden muß oder ob die neu hinzugekommenen Verkehrsmeldungen keinen Anlaß zur Veränderung der Route erforderlich machen, da sie unter Berücksichtigung von erkannten Verkehrsmeldungen bestimmt wurde. Die Routenbestimmung wird durch diese Maßnahme besonders ökonomisch.

Besonders vorteilhaft ist es auch, eine Freigabeschaltung vorzusehen, die Verkehrsnachrichten zur Anzeige freigibt, die auf die abweichenden Strecken Bezug nehmen. Der Fahrer eines Fahrzeuges wird dadurch sofort über Verkehrsbehinderungen informiert, falls das Navigationssystem einen vom üblichen abweichenden Vorschlage unterbreitet.

Dies ist insbesondere dann wichtig, wenn der Fahrer die Strecke in etwa kennt und eine andere Verkehrsführung bei ihm die Vermutung aufkommen läßt, daß das Navigationssystem vom besten Weg abweichen möchte. Vorteilhaft ist auch, wenn die Freigabe der Verkehrsnachricht kurz vor dem Punkt erfolgt, bei dem von der alten Route abgewichen wird. Der Fahrer eines Fahrzeuges wird dann aktuell über Verkehrsbehinderungen informiert, wenn das Navigationssystem aufgrund von bekannten Behinderungen von der sonst üblichen kürzesten Route abweicht.

### Zeichnung

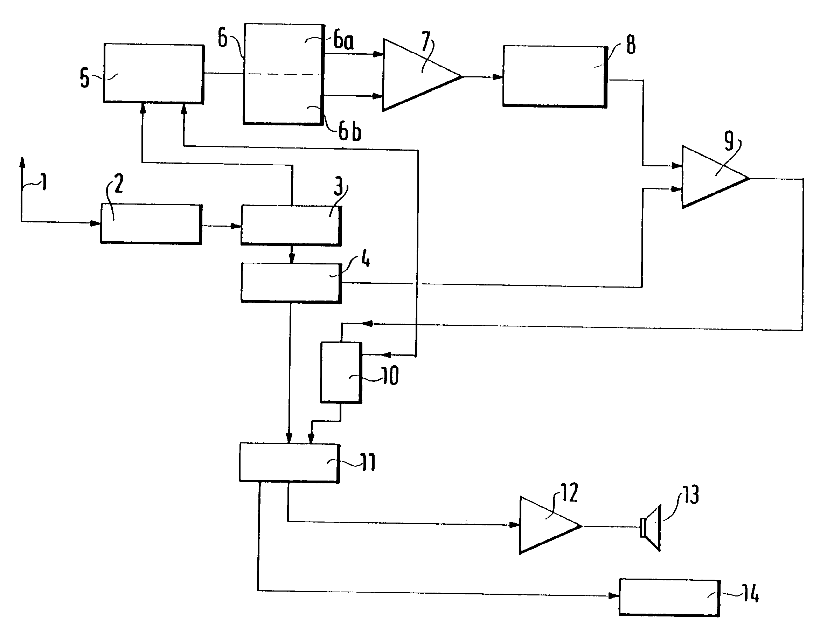

Ein Ausführungsbeispiel der Erfindung ist in der Zeichnung dargestellt und in der nachfolgenden Beschreibung näher erläutert.

### Beschreibung des Ausführungsbeispieles

Die Figur zeigt eine Antenne 1, die die aufgenommenen Signale eines Rundfunksenders einem Rundfunkempfänger 2 zuführt, der in einem Fahrzeug eingebaut ist. Das Ausgangssignal des Rundfunkempfängers 2 ist einem Verkehrsfunkdekoder 3 zugeführt, der in der Lage ist, übertragene Verkehrsnachrichten auszuwerten. Ein solcher Verkehrsfunkdekoder ist beispielsweise in der DE-OS 35 36 820 beschrieben. Die vom Verkehrsfunkdekoder 3 ausgewerteten Nachrichten werden einem Verkehrsdurchsagenspeicher 4 zugeführt, in dem die Verkehrsfunknachrichten standardisiert gespeichert werden. Ein solcher Verkehrsdurchsagenspeicher ist beispielsweise in der DE-OS 37 24 516 beschrieben. Die Verkehrsfunkinformationen werden vom Verkehrsfunkdecoder 3 einem Navigationssystem 5 zugeführt. Ein solches Navigationssystem ist beispielsweise in der DE-OS 35 12 127 beschrieben. Das Navigationssystem 5 steht mit einem Speicher 6 in Verbindung der zwei Speicherbereiche 6a und 6b aufweist. Die Speicherbereiche 6a und 6b sind zu einem Vergleicher 7 auslesbar, der die Speicherinhalte der Speicher 6a und 6b miteinander vergleicht und an seinem Ausgang vom Speicher 6b abweichende Streckeninformationen in einem Abweichungsspeicher 8 niederlegt. Die Dateninhalte des Abweichungsspeichers 8 sind einem Vergleicher 9 zugeführt, wobei dem anderen Eingang des Vergleichers 9 die Verkehrsinformationen des Verkehrsdurchsagenspeichers 4 zugeführt sind. Am Ausgang des Vergleichers 9 werden nun Signale ausgegeben, die erkennen lassen, welche Strecken aufgrund der Verkehrsinformation im Verkehrsdurchsagespeicher 4 bei der neuen Fahrtroutenwahl nicht mehr berücksichtigt werden. Diese Ausgangssignale werden zu einer Freigabeschaltung 10 geführt. Die Freigabeschaltung 10 nimmt hierbei mehrere Aufgaben wahr. Einerseits ist sie mit dem Navigationssystem 5 verbunden. Hierbei kann durch eine Datenübertragung beim Eingang neuer Verkehrsinformationen vom Verkehrsfunkdekoder 3 zum Navigationssystem 5 festgestellt werden, ob die entsprechende Verkehrsfunkinformation vom Navigationssystem bereits berücksichtigt wurde oder nicht. Zum anderen kann das Navigationssytem 5 die Freigabeschaltung über den genauen Standort des Fahrzeuges informieren. Die Freigabeschaltung 10 schaltet nun den Dekoder 11, der nur solche Informationen aus den Verkehrsdurchsagenspeicher 4 weiterschaltet, die in bezug zur neuen Fahrstrecke stehen, d.h. wo von der alten Fahrstrecke abgewichen wird. Der Dekoder 11 hat Ausgänge, die zu einer Anzeigevorrichtung 14 oder zu einem Verstärker 12 führen. Am Ausgang des Verstärkers 12 ist ein Lautsprecher 13 angeschlossen.

Die Wirkungsweise der Schaltungsanordnung ist im folgenden näher erläutert. Im Navigationssytem 5 wird in bekannter Weise aufgrund des Standortes des Fahrzeuges und des vorgegebenen Zielpunktes eine Route bestimmt, die den Fahrer des Fahrzeuges zum Ziel bringen soll. Diese Route wird hierbei im Speicherbereich 6a des Speichers 6 niedergelegt. Werden nun vom Empfänger 2 Verkehrsnachrichten über die Antenne 1 empfangen, so werden diese Verkehrsnachrichten im Verkehrsfunkdekoder 3 in bekannter Weise aufbereitet. Diese Verkehrsnachrichten werden vom Verkehrsfunkdekoder 3 zum Navigationssystem übertragen und im Verkehrsdurchsagenspeicher 4 abgelegt. Das Navigationssystem überprüft nun anhand der im Speicherbereich 6a niedergelegten Route, ob diese Verkehrsfunknachrichten für die vorgesehene Route relevant sind. Ist dies nicht der Fall, so wird die im Speicherbereich 6a abgelegte Route nicht geändert. Betrifft jedoch die Verkehrsfunknachricht die im Speicherbereich 6a abgelegte Route, so berechnet das Navigationssystem 5 eine neue Route, bei der der Streckenabschnitt nicht berücksichtigt ist, bei dem gemäß der Verkehrsfunknachricht mit Behinderungen zu rechnen ist und legt sie im Speicher 6b ab. Aufgrund der im Navigationssystem 5 hinterlegten Information über die Art der Straßen so wie aufgrund der durch die Verkehrsfunkmeldung übertragenen Information über die Art der Behinderung werden nun vom Navigationssystem die beiden bestimmten Routen bezüglich der Fahrzeit für einen durchschnittlichen Fahrer miteinander verglichen. Maßgebend ist hierbei die Straßenart (auf einer Autobahn kann schneller gefahren werden als auf einer Bundesstraße) und die Behinderung (1 km stockender Verkehr kostet weniger Zeit als 5 km Stau). Stellt sich dabei heraus, daß die alte Route trotz der Behinderung schneller ist als die neu ermittelte Route, wird die neu ermittelte Route wieder verworfen und der Speicherbereich 6b wieder gelöscht. Stellt sich aber heraus, daß aufgrund der neuen Route der Zielpunkt schneller erreicht werden kann, so wird die neue Route für das Navigationssystem zur Führung des Fahrers verwendet. Durch diese Maßnahme wird also erreicht, daß der Fahrer eines Fahrzeuges mit dem Navigationssystem schnellstmöglich sein Ziel erreicht.

Eine der Fahrzeit porportionale Größe wird bei der Verkehrsdurchsage aufgrund der Information über die Art der Straßen (Autobahn, Bundesstraße, Nebenstraße) und der Art der Behinderung bestimmt. Liegt beispielsweise stockender Verkehr mit einer kurzen Länge auf einer Autobahn vor, ist es unter Umständen immer noch sinnvoller, die Autobahn zu benutzen, als auf eine Nebenstraße auszuweichen. Ist dagegen eine Straße wegen Behinderungen gänzlich gesperrt, so muß auf jeden Fall auf eine andere Strecke ausgewichen werden. Schließlich kann auch der Fall auftreten, daß sich ein erheblicher Stau ausgebildet hat, was die Fahrzeit erheblich vergrößern würde. Auch in diesem Falle ist es sinnvoll, aufgrund der Information vom Verkehrsfunkempfänger auf die neue Streckenführung auszuweichen, die im Speicherbereich 6b abgelegt ist.

Die in den Speicherbereichen 6a und 6b zur Routenführung abgelegte alte Route und neue Route wird im Vergleicher 7 daraufhin verglichen, welche Streckenführungen der alten Route sich bezüglich der neuen Route geändert haben. Nach dem Abschluß des Vergleichsvorgangs sind daher im Abweichungsspeicher 8 die Strecken verzeichnet, die bei der neuen Route nicht mehr vorgeschlagen werden, jedoch bei der alten Route befahren worden wären. Diese Information ist dafür nützlich, daß dann vom Navigationssystem bei Eintreffen neuer Nachrichten besonders schnell erkannt werden kann, ob eine entsprechende Verkehrsmeldung bereits berücksichtigt worden ist. Betrifft nämlich die eingehende unveränderte Verkehrsmeldung einen Streckenabschnitt, der im Abweichungsspeicher 8 abgelegt ist, so ist davon auszugehen, daß dieser Streckenabschnitt bereits berücksichtigt worden ist oder aber bei weiteren Betrachtungen keine Rolle mehr zu spielen hat, da er bei der neuen Streckenführung nicht mehr zu berücksichtigen ist. Da die eingangs erwähnte Auswahl bezüglich der Fahrzeit bereits getroffen worden ist, ist es für das Navigationssystem nicht mehr notwendig, eine neue Streckenführung zu bestimmen und die Fahrzeiten miteinander zu vergleichen. Das Navigationssystem kann sich daher auf die Ortungsaufgaben beschränken.

Die im Abweichungsspeicher 8 vorhandene Information sind jedoch vorteilhafter Weise auch für die Information des Fahrers zu verwenden. Führt nämlich das Navigationssystem den Fahrer unter Berücksichtigung der Verkehrsbehinderungen auf einer neuen Route, so wird dies zumindest beim ortskundigen Fahrer Verwunderung hervorrufen, wenn er über die Verkehrsbehinderungen nicht informiert ist. Im Vergleicher 9 wird daher festgestellt, für welche im Abweichungsspeicher 8 vorliegenden Streckenabschnitte Verkehrsinformationen im Verkehrsdurchsagespeicher 4 abgelegt sind. Dieser Vergleich führt in der Freigabeschaltung 10 dazu, daß die Verkehrsinformationen, die die im Abweichungsspeicher 8 abgelegten Strecken betreffen, dem Fahrer zur Kenntnis gebracht werden.

Dies erfolgt durch den Dekoder 11, der aufgrund des Vergleichs über die Freigabeschaltung 10 diese Information entweder akustisch über den Verstärker 12 und den Lautsprecher 13 oder optisch über die Anzeigevorrichtung 14 ausgibt. Durch die Freigabeschaltung kann bewirkt werden, daß der eigentlichen Verkehrsinformation, beispielsweise der Information "Autobahn A81, Stuttgart Richtung Heilbronn zwischen Feuerbach und Zuffenhausen 1 Km Stau" die Angabe vorausgestellt wird: "Das Navigationssystem weicht aus folgendem Grund vom kürzesten Weg ab:". Insbesondere der ortskundige Fahrer wird daher dem Navigationssystem nicht mißtrauisch gegenüberstehen, wenn er erfährt, warum das Navigationssystem eine andere Fahrtrichtung vorschlägt. Die Verbindung zwischen der Freigabeschaltung 10 und dem Navigationssystem 5 dient einerseits dazu, die abweichenden Strecken, bei denen die Verkehrsinformationen schon berücksichtigt sind, dem Navigationssystem zur Verfügung zu stellen, so daß keine Routenberechnung bei einem neuerlichen Empfang dieser Verkehrsnachrichtung notwendig ist, und andererseits, dazu den Standort des Fahrzeuges vom Navigationssystem zur Freigabeschaltung zu übermitteln. Dadurch wird es möglich, die Information für den Fahrer kurz vor dem Zeitpunkt freizugeben, wo die an und für sich nächstliegende Route gemäß Speicherbereich 6a verlassen wird. Der Fahrer des Fahrzeugs erhält daher nicht bereits zu einem relativ frühen Zeitpunkt die Information, daß die Route geändert worden ist, die er dann eventuell beim Abweichen von der üblichen Route bereits vergessen hat, sondern kurz vor dem Zeitpunkt, wo die für ihn überraschende Richtungsweisung erfolgt. Für dem Fahrer des Fahrzeuges ist es daher besonders einfach möglich, die für ihn überraschende Richtungsweisung des Navigationssystemes nachzuvollziehen.

Die digitalen Daten werden im Dekoder 11 so aufbereitet, daß sie entweder in der Anzeigeeinrichtung 14 angezeigt werden können oder es wird ein digitaler Sprachbaustein verwendet, der es ermöglicht, die Information verbal über den Lautsprecher 13, der beispielsweise in Verbindung mit dem Empfänger bereits vorhanden ist, auszugeben.

Es versteht sich, daß die Vergleicher 7 und 9, die Freigabeschaltung 10 der Dekoder 11 und die Speichereinrichtung in Verbindung mit dem Navigationssystem untergebracht sein können und mit dem Navigationssystem oder dem Empfänger integriert sein können.

## Patentansprüche

1. Navigationssystem für Landfahrzeuge mit einem Ortungssystem zur Bestimmung des Standpunktes des Landfahrzeuges, einer Eingabevorrichtung für den Zielpunkt des Landfahrzeuges, mit Mitteln zur Bestimmung der Route für das Landfahrzeug vom Standpunkt zum Zielpunkt und mit einem Empfänger (2, 3) zum Empfang und zur Auswertung von normiert übertragenen Verkehrsnachrichten, wobei der Empfänger geeignet ist, die empfangenen Verkehrsnachrichten zum Navigationssystem (5) zu übertragen und das Navigationssystem (5) geeignet ist, unter Berücksichtigung der in den Verkehrsnachrichten enthaltenen Informationen (Straßensperrungen, Staus) eine neue Route für das Landfahrzeug zu bestimmen, dadurch gekennzeichnet, daß das Navigationssystem so ausgebildet ist, daß eine alte ermittelte Route ohne Berücksichtigung der Verkehrsnachrichten und eine neue Route mit Berücksichtigung von Verkehrsnachrichten in jeweils einem Speicherbereich (6a, 6b) abgelegt sind, daß die beiden abgelegten Routen einem Vergleicher (9) zugeführt sind, der die beiden Routen miteinander vergleicht und die bezüglich der neuen Route abweichenden Strecken mit denen vom Empfänger (2, 3) empfangenen Informationen über die Strecken vergleicht.

2. Navigationssystem nach Anspruch 1, dadurch gekennzeichnet, daß in der Verkehrsnachricht eine Information über die Dauer der Fahrtzeit und über den Streckenabschnitt enthalten ist, und daß die Route für das Landfahrzeug durch die minimale Fahrzeit bestimmt ist.

3. Navigationssystem nach Anspruch 1 oder 2, dadurch gekennzeichnet, daß die abweichenden Strecken in einem Abweichungsspeicher (8) abgelegt sind.

4. Navigationssystem nach einem der vorhergehenden Ansprüche, dadurch gekennzeichnet, daß die empfangenen Verkehrsnachrichten in einem Verkehrsdurchsagespeicher (4) abgelegt sind.

5. Navigationssystem nach einem der vorhergehenden Ansprüche, dadurch gekennzeichnet, daß eine Freigabeschaltung (10) vorgesehen ist, die die Verkehrsnachrichten zur Anzeige freigibt, die auf die abweichenden Strecken Bezug nehmen.

6. Navigationssystem nach Anspruch 5, dadurch gekennzeichnet, daß die Anzeige akustisch oder optisch erfolgt.

7. Navigationssystem nach Anspruch 5 oder 6, dadurch gekennzeichnet, daß die Freigabe der Verkehrsnachrichten kurz vor dem Punkt erfolgt, an dem von der alten Route abgewichen wird.

## Claims

1. Navigation system for land vehicles, having a locating system for determining the location of the land vehicle, an input device for the destination of the land vehicle, having means for determining the route for the land vehicle from the location to the destination and having a receiver (2, 3) for receiving and evaluating traffic information transmitted in a standardized form, the receiver being suitable for transmitting the received traffic information to the navigation system (5) and the navigation system (5) being suitable for determining a new route for the land vehicle in consideration of the information contained in the traffic information (road blocks, traffic jams), characterized in that the navigation system is designed in such a way that an old established route without consideration for the traffic information and a new route with consideration for traffic information are stored in a respective memory area (6a, 6b), in that the two stored routes are fed to a comparator (9), which compares the two routes with each other and compares the sections which deviate as far as the new route is concerned with that information received by the receiver (2, 3) on the sections.

2. Navigation system according to Claim 1, characterized in that in the traffic information there is contained information on the duration of the travelling time and on the section portion, and that the route for the land vehicle is determined by the minimum travelling time.

3. Navigation system according to Claim 1 or 2, characterized in that the deviating sections are stored in a deviation memory (8).

4. Navigation system according to one of the preceding claims, characterized in that the received traffic information is stored in a traffic announcement memory (4).

5. Navigation system according to one of the preceding claims, characterized in that an enabling circuit (10) is provided, which enables display of the traffic information which refer to the deviating sections.

6. Navigation system according to Claim 5, characterized in that the display takes place acoustically or optically.

7. Navigation system according to Claim 5 or 6, characterized in that the enabling of the traffic information takes place shortly before the point at which a deviation is made from the old route.

## Revendications

1. Système de navigation pour des véhicules terrestres avec un système de navigation servant à déterminer l'emplacement du véhicule, un dispositif d'entrée pour introduire la destination que doit rejoindre le véhicule, des moyens pour déterminer le chemin du véhicule entre son emplacement et la destination et un récepteur (2, 3) pour recevoir et exploiter des informations de circulation, normalisées, transmises, le récepteur convenant à la transmission des informations de circulation reçues vers le système de navigation (5) et ce système de navigation (5) convenant en tenant compte des informations (routes fermées, bouchons) contenues dans les informations de circulation, de définir un nouveau chemin pour le véhicule, système caractérisé en ce qu'il est conçu pour inscrire un ancien chemin composé sans tenir compte des informations de circulation et un nouveau chemin tenant compte des informations de circulation dans chaque fois une zone de mémoire 6a, 6b et les deux chemins enregistrés sont fournis à un comparateur 9 qui compare les deux chemins et compare les trajets différents du nouveau chemin et les compare aux informations reçues par le récepteur 2, 3 et concernant les trajets.

2. Système de navigation selon la revendication 1, caractérisé en ce que les renseignements de circulation contiennent une information concernant la durée du parcours et les segments de trajet et en ce que le chemin du véhicule est établi par un temps de parcours minimum.

3. Système de navigation selon la revendication 1 ou 2, caractérisé en ce que les chemins de déviation sont inscrits dans une mémoire de différence (8).

4. Système de navigation selon l'une des revendications précédentes, caractérisé en ce que les informations de circulation reçues sont inscrites dans une mémoire de message de circulation (4).

5. Système de navigation selon l'une des revendications précédentes, caractérisé par un circuit de libération (10) qui libère l'affichage des messages de circulation concernant les trajets de déviation.

6. Système de navigation selon la revendication 5, caractérisé en ce que l'affichage se fait par moyen optique ou acoustique.

7. Système de navigation selon les revendications 5 ou 6, caractérisé en ce que la libération des informations de circulation se fait juste avant l'instant où on dévie de l'ancien chemin.
